Europäisches Patentamt

European Patent Office

Office européen des brevets

(11) Numéro de publication : **0 333 529 B1**

(12) **FASCICULE DE BREVET EUROPEEN**

(45) Date de publication du fascicule du brevet :
07.04.93 Bulletin 93/14

(51) Int. Cl.⁵ : **C09D 5/00, A63B 39/06**

(21) Numéro de dépôt : **89400414.2**

(22) Date de dépôt : **14.02.89**

(54) Composition pour l'enduction de la surface externe de ballons de sport et ballons ainsi obtenus.

(30) Priorité : **19.02.88 FR 8802031**

(43) Date de publication de la demande :
**20.09.89 Bulletin 89/38**

(45) Mention de la délivrance du brevet :
**07.04.93 Bulletin 93/14**

(84) Etats contractants désignés :
**AT BE CH DE ES FR GB GR IT LI LU NL SE**

(56) Documents cités :
**DE-A- 1 504 730
GB-A- 1 457 869
CHEMICAL ABSTRACTS, vol. 90, no. 10, mars 1979, page 77, abstract no. 73445s, Columbus, Ohio, US; & JP-A-78 129 227**

(73) Titulaire : **ADIDAS SARRAGAN FRANCE S.A.R.L.
Route de Saessolsheim
F-67700 Landersheim (FR)**

(72) Inventeur : **Sonntag, Jean-Marie
Neudorfstrasse 22
W-7640 Kehl 1 (DE)**

(74) Mandataire : **Phélip, Bruno
c/o Cabinet Harlé & Phélip 21, rue de La Rochefoucauld
F-75009 Paris (FR)**

EP 0 333 529 B1

## Description

L'invention appartient au domaine des articles de sport et de loisirs. Elle a plus particulièrement pour objet une composition qui trouve application pour l'enduction de la surface externe des ballons de sport, afin de conférer à ceux-ci des propriétés améliorées, spécialement dans des conditions de jeu humides ou mouillées. L'invention est également relative aux ballons ainsi obtenus.

Il existe de nombreux types de ballons qui se distinguent notamment par la nature de leur structure interne (carcasse monocoque ou vessie) ou de leur revêtement extérieur (ballons cousus main ou non cousus main). Les matières constitutives des surfaces extérieures des ballons sont également très diverses, depuis les matériaux traditionnels, tels que le cuir, jusqu'aux matières synthétiques, telles que les polyuréthanes et le polychlorure de vinyle. Dans la plupart des cas, les revêtements externes servent de couches d'usure et ont aussi une fonction esthétique. Ils améliorent également les propriétés de "toucher de balle" qui sont très importantes pour les utilisateurs.

Les praticiens savent qu'en raison de la nature des revêtements actuels, les ballons ne donnent pas toujours pleine satisfaction, qu'il s'agisse de sports au pied ou à la main. On recherche souvent une meilleure prise de balle et, pour les sports en plein air, il faut trouver des ballons qui conviennent à des conditions de jeu variées et parfois extrêmes, par exemple sur des terrains gorgés d'eau ou même avec de la neige fondante.

DE-A-1 504 730 décrit un procédé de fabrication de feuilles en matière plastique à propriétés mécaniques améliorées.

GB-A-1 457 869 décrit un procédé pour conférer des propriétés de glissement ou l'inverse à une surface d'un objet.

CHEMICAL ABSTRACTS, vol. 90, N° 10, Mars 1979, page 77, décrit des revêtements texturés épais formés d'émulsions acryliques et de sable.

L'invention a pour objet de traiter la surface externe des ballons, de façon à leur conférer une prise améliorée et également à permettre leur utilisation optimale dans des conditions humides ou mouillées, en particulier pour leur donner un glissé plus régulier et éviter qu'ils "fusent" sur le terrain.

Sous un premier aspect, l'invention concerne un procédé de traitement de la surface externe de ballons de sport, qui consiste à appliquer sur ladite surface externe une composition à base d'un liant ou matrice capable d'adhérer fermement à la surface du ballon et contenant une charge inorganique en particules comprenant au moins une substance ayant un caractère hydrophile, une surface spécifique élevée supérieure à 40 m2/g et une densité apparente inférieure à 100 g/l.

Sous un deuxième aspect, l'invention concerne une composition pour la mise en oeuvre du procédé, ladite composition étant à base d'un liant ou matrice capable d'adhérer fermement à la surface du ballon et contenant une charge inorganique en particules comprenant au moins une substance ayant un caractère hydrophile, une surface spécifique élevée supérieure à 40 m2/g et une densité apparente inférieure à 100 g/l.

Après application d'une telle composition, la surface du ballon devient rugueuse, spécialement dans des conditions de jeu humides ou mouillées.

Pour la composition de l'invention, on peut utiliser des liants ou matrices de natures variées. La première condition à remplir est que le liant soit capable d'adhérer fermement à la surface du ballon et, dans la plupart des cas, il est mis en oeuvre sous forme liquide, de viscosité convenable pour permettre l'application. Ce genre de liant peut contenir ou non des solvants et, lorsque ceux-ci sont présents, ils laissent, après l'application, un film résistant à la surface du substrat, en l'espèce le ballon. Si l'on souhaite obtenir de bonnes caractéristiques d'utilisation pour les sports en plein air, on préfère que les liants ou matrices mis en oeuvre soient pratiquement non sensibles à l'eau, ce qui signifie que leurs propriétés ne sont pas fondamentalement modifiées dans des conditions de jeu sur terrain mouillé ou humide, voire même en cas de neige fondante. En particulier, le liant devra présenter une stabilité suffisante en présence d'eau et, par exemple, ne pas subir de gonflement ou autres modifications semblables. Il peut aussi être avantageux que, grâce à sa nature chimique, le liant ait une bonne résistance au froid. L'homme de métier dispose d'un nombre de produits assez important pour réaliser de tels objectifs, ces produits étant notamment disponibles dans le domaine des peintures ou vernis. Le liant peut aussi être transparent ou coloré, bien qu'en général on préfère, pour conserver l'aspect esthétique extérieur de la surface du ballon, faire appel à des liants ou matrices transparents.

A titre d'exemple illustratif et nullement limitatif des liants ou matrices utilisables, on peut citer les produits à base de polyuréthane, en solution ou en émulsion, les produits à base de styrène-butadiène, de butadiène-acrylonitrile, ou des produits à base acrylique tels que les polyacrylates ou les polyméthacrylates. Les meilleurs résultats ont été obtenus avec des liants à base de polyuréthane, en particulier à groupes NCO provenant de bases aliphatiques. De tels liants sont transparents, possèdent une élasticité élevée, de bonnes caractéristiques, d'adhésion, une excellente stabilité au froid. Ils peuvent aussi être aisément appliqués en milieu solvant. Des exemples de produits ayant donné satisfaction sont: les vernis transparents 870 428/5 (fournisseur, société Keck Chimie) associés au Durcisseur D33 de la même société. On a constaté aussi que de tels produits présentaient une bonne stabilité aux rayonnements ultraviolets.

Un constituant essentiel de la composition selon l'invention est la charge inorganique en particules, qui est uniformément répartie au sein du liant. Elle comprend au moins une substance ayant un caractère hydrophile, grâce à quoi le liant devient thixotropique, de sorte qu'aux endroits où est appliquée la composition, l'étalement se trouve limité et l'on obtient alors un effet de relief à la surface du film. Une autre fonction intéressante de la substance ayant une nature ou une tendance hydrophile, est de contribuer à l'obtention d'une rugosité de surface optimale dans des conditions humides ou mouillées. Il convient que la substance inorganique possède une surface spécifique élevée, ce qui signifie que cette surface spécifique est supérieure à 40 m2/g, de préférence à 200 m2/g, par exemple voisine de 150 m2/g. Une autre caractéristique est la faible densité, ce qui signifie que la densité apparente (ou à l'état non tassé) de la substance doit être inférieure à 100 g/l, de préférence à 50-70 g/l, par exemple de l'ordre de 50 g/l. Un autre paramètre à prendre en considération est la finesse des particules de la charge. En effet, les particules doivent se maintenir à la surface du ballon et, en outre, la rugosité ne doit pas être excessive, bien qu'elle soit sensible au toucher et qu'elle s'accentue dans des conditions de jeu sur terrains humides ou mouillés. On utilisera donc de préférence des particules fines, ayant une dimension moyenne de 4 à 50 nanomètres, en particulier de 5 à 30 nanomètres environ.

Parmi les matériaux inorganiques capables de répondre à ces conditions, on peut citer essentiellement le verre et la silice. Les meilleurs résultats ont été obtenus avec des composés de silice pyrogénée, dont un exemple illustratif est le produit mis sur le marché par la société WACKER CHEMIE sous la dénomination WACKER HDK V 15.

On a constaté que l'enduction selon l'invention conférait aux ballons des propriétés nettement améliorées, spécialement dans des conditions de jeu sur terrains mouillés et humides et éventuellement en neige fondante. Le glissé est plus régulier, de même que le comportement au rebond. Au toucher, la prise est meilleure, ce qui est ressenti favorablement par les gardiens de buts, dans le cas de l'application de l'invention à des ballons de football.

Selon une autre caractéristique de l'invention, il est encore possible d'améliorer la rugosité de surface par une composition pour l'enduction de la surface externe des ballons de sport, à base d'un liant ou matrice, capable d'adhérer fermement à la surface du ballon et contenant une charge inorganique en particules, comprenant la combinaison d'au moins une substance de caractère hydrophile, à surface spécifique élevée et d'au moins une substance de caractère hydrophobe, ces deux substances ayant une faible densité apparente.

Ainsi, l'invention propose de combiner à la substance de nature ou de tendance hydrophile, décrite précédemment, une autre substance de charge dont la fonction est de s'intégrer au film appliqué sur le ballon et de lui conférer une rugosité optimale à caractère hydrophobe. La densité de cette deuxième substance sera également faible, c'est-à-dire inférieure à 0,4 kg/dm3, de préférence à 0,2 kg/dm3 et par exemple de l'ordre de 0,1 à 0,2 kg/dm3, à l'état non tassé. Il importe aussi que la substance hydrophobe se présente sous forme de particules fines, dont la dimension moyenne est de 10 à 200 microns en particulier de 50 à 120 microns, par exemple de l'ordre de 60 $\mu$ de diamètre. Des substances inorganiques ayant donné d'excellents résultats sont des substances à base de verre ou de silice, présentées sous forme de microsphérules, remplies d'air et résistant à la compression. De tels produits sont accessibles à l'homme du métier, par exemple sous la dénomination Q CELL 600 (The P.Q. Corporation) et B 23/500 ou B 28/750 de la société 3M.

Il s'agit de produits à base de silicates ou de borosilicates alcalins et/ou alcalino-terreux. A titre d'exemple, la composition de microsphérules creuses Q CELL est la suivante, les chiffres étant exprimés en % en poids:

| | |
|---|---|
| $SiO_2$ : 60,5 | $Al_2O_3$ : 0,2 |
| $Na_2O$ : 22,5 | $Fe_2O_3$ : 0,1 |
| $B_2O_3$ : 11,4 | $CaO$ : 0,1 |
| $K_2O$ : 0,5 | $H_2O$ : 5 |

La combinaison de charges inorganiques, par exemple d'un composé de silice pyrogénée et de microsphérules de verre, permet d'obtenir des résultats optimaux en vue de l'enduction des ballons, en particulier de football, susceptibles d'être utilisés sur des terrains mouillés ou humides.

On a dit précédemment que le liant ou matrice pouvait être transparent ou coloré. Pour conférer à la composition selon l'invention des propriétés particulières, on peut aussi lui adjoindre d'autres adjuvants, tels que des pigments ou des stabilisants. Le choix de tels additifs est à la portée de l'homme du métier, en fonction de la nature du liant auquel ils doivent être combinés. On dispose maintenant de nombreux produits permettant de conférer une protection supplémentaire contre les dégradations photochimiques. La mise en oeuvre d'un pigment peut contribuer aussi à la fonction esthétique, en mettant en évidence, d'une manière visible, les endroits de la surface du ballon sur lesquels le film d'enduction a été appliqué. Outre la rugosité au toucher, au moins en certains endroits, la surface extérieure des ballons de l'invention peut donc se distinguer aussi par la présence d'enductions discontinues offrant un aspect et une coloration différents par rapport au reste de la surface.

La composition selon l'invention est aisée à mettre en oeuvre. Elle est préparée en introduisant dans le liant ou matrice la charge inorganique et en la dispersant de manière uniforme, par exemple par agitation mécanique. Lorsque la charge comprend deux substances, une substance de nature ou tendance hydrophile et une substance de caractère hydrophobe, l'introduction dans le liant ou matrice se fait dans un ordre indifférent. Si un pigment ou stabilisant est utilisé, il est également introduit dans le liant à un stade quelconque de la fabrication de la composition.

On enduit la surface extérieure du ballon à l'aide de la composition selon l'invention selon une technique générale connue. L'enduction peut être réalisée sur le ballon déjà gonflé, mais de préférence, on enduit à plat les panneaux qui seront ensuite utilisés comme couche de revêtement extérieur.

La technique d'enduction proprement dite est celle de la sérigraphie ou celle de la tampographie, cette dernière consistant à mettre en contact à cadence rapide le substrat à enduire avec un tampon applicateur. Selon la technique classique de sérigraphie, on dispose à la surface un écran comportant des orifices plus ou moins régulièrement répartis et on applique la composition à travers cet écran, par tout moyen approprié, par exemple à la brosse, au racle, ou par pulvérisation.

Le nombre et la taille des orifices de l'écran sont à la portée de l'homme du métier. Si l'on désire obtenir de bons comportements sur terrains mouillés ou humides, il importe de réaliser un réseau suffisamment dense d'enductions ponctuelles, par exemple en utilisant un écran ayant une ouverture de mailles de 20 à 300 microns et une densité de mailles de 20 à 200 au centimètre.

On obtient ainsi sur le ballon un film ayant en général une épaisseur de 15 à 100 microns et comportant à des endroits de préférence régulièrement répartis, des motifs légèrement rugueux dont la forme et le nombre correspondent aux caractéristiques (orifices) de l'écran utilisé lors de l'enduction. Dans la pratique, on a obtenu de très bons résultats pour des ballons de football avec des orifices de forme générale triangulaire, fournissant un réseau discontinu d'éléments de 12 à 15 mm2 environ, séparés de 2 à 5 mm environ, ces éléments ayant une rugosité plus importante que celle des parties de la surface du ballon qui les séparent. Grâce à la présence de la charge hydrophile, les zones d'enduction ont une surface limitée sans étalement et le caractère rugueux de la charge se manifeste à la surface du film, la charge n'étant que partiellement enrobée et protégée dans le film.

L'homme du métier comprendra que la présente invention est applicable à n'importe quel type de ballons, quelle que soit la nature de la surface de ceux-ci. Une application de la présente invention consiste à utiliser la composition pour l'enduction d'un complexe de revêtement combinant une couche externe en matériau traditionnel et une sous-couche comprenant au moins une matière microalvéolaire.

En principe, l'enduction en une seule passe de la composition selon l'invention suffit à obtenir les résultats désirés sur la surface du ballon. Toutefois, rien ne s'oppose à ce que, si nécessaire, l'opération d'enduction soit répétée.

Les conditions d'application pratique de la composition selon l'invention varieront selon les formulations de celle-ci, et en particulier selon la teneur en solides. Pour ce qui est de la quantité de charge inorganique, sa quantité en poids par rapport au poids de liant ou matrice, dépendra aussi de la nature de la formulation ainsi que du fait que la substance à nature ou tendance hydrophile est combinée ou non à une substance de caractère hydrophobe. Avec des liants à base de polyuréthane et des charges inorganiques comprenant un composé de silice pyrogénée, la quantité de charge est approximativement de 30 à 70 g/kg. Lorsque la charge inorganique comprend des microsphérules de verre ou de silice, comme indiqué précédemment, leur quantité est de l'ordre de 10 à 50 g/kg par rapport au poids total du liant. Ces indications ne sont données qu'à titre illustratif, car l'homme du métier, par des essais de routine, peut déterminer les quantités de charge à mettre en oeuvre, selon les résultats à obtenir et en particulier selon la rugosité de surface qu'il convient de réaliser sur le ballon.

L'invention sera maintenant illustrée sans être aucunement limitée par les exemples qui suivent ainsi qu'en référence aux dessins annexés sur lesquels :
- Figure 1 est une vue de face d'une partie de surface d'un ballon, traitée conformément à l'invention,
- Figure 2 est une coupe selon la ligne II-II de la Figure 1,
- Figure 3 est une vue de face de la surface d'un ballon selon une variante de l'invention.

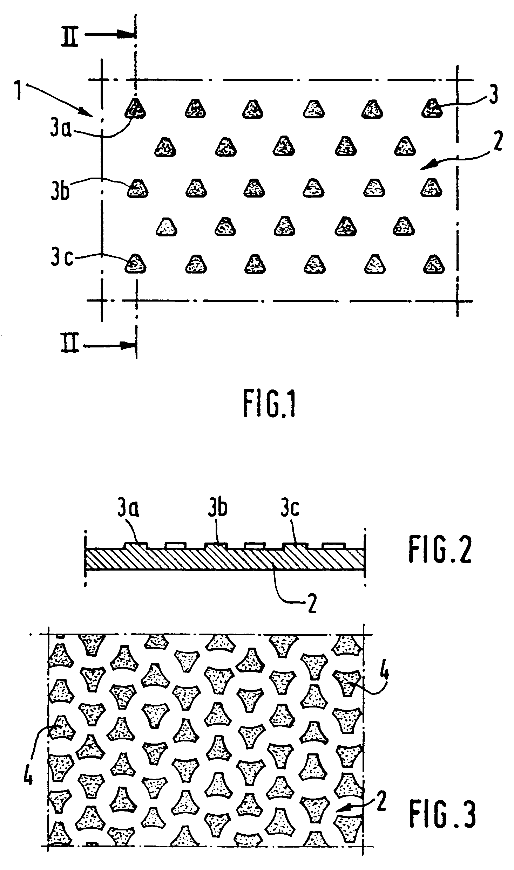

Telle qu'elle est représentée à la Figure 1, la partie 1 de la surface du ballon comporte un revêtement 2 traditionnel et des zones 3 obtenues par enduction de la composition selon l'invention, par exemple 3a, 3b, 3c, de rugosité supérieure au reste de la surface. La coupe de la Figure 2 illustre, d'une manière schématique et grossie, les aspérités 3a, 3b, 3c de l'enduction appliquée sur la structure 2 du ballon. Ainsi qu'on l'a indiqué précédemment, cette structure peut être quelconque (cuir, polyuréthane).

La Figure 3 représente une variante correspondant aux ballons ayant donné les meilleurs résultats. L'organisation des aspérités 4 est quelque peu différente à la surface 2 du ballon de celle illustrée à la Figure 1. Les orientations relatives des zones généralement triangulaires sont conformes au dessin.

Dans les exemples qui suivent, on a utilisé une composition de l'invention pour l'enduction de ballons de football comportant des panneaux cousus à la main. La Figure 3 illustre des aspérités 4, de forme générale triangulaire, mais toute autre forme pourrait être adoptée. Les aspérités 4 sont réparties, dans une disposition correspondant à celle de l'écran, qui a été utilisé lors de l'enduction selon la technique générale de la sérigraphie ou de la tampographie.

Dans le cas particulier considéré, la composition selon l'invention comportait, à titre de liant, une solution transparente de polyuréthane à deux composants, et à base aliphatique. Ce produit est mis sur le marché par la société KECK CHIMIE sous la dénomination Vernis Transparent 870428/5. Il possède une aptitude parfaite à adhérer à la surface du ballon, d'autant que celle-ci est réalisée en polyuréthane. Il possède par ailleurs une élasticité élevée et une excellente stabilité au froid.

La composition contient aussi une charge inorganique formée de 10 g/kg d'un composé de silice pyrogénée et de 40 g/kg de microsphérules de verre. Le composé de silice pyrogénée est celui mis sur le marché par la société WACKER CHEMIE sous la dénomination WACKER HDK V 15, ayant une dimension moyenne de particules de 5 à 30 nanomètres, une surface spécifique d'environ 150 m2/g et une densité d'environ 50 g/l. On a constaté que, lors de l'enduction, le revêtement à base de polyuréthane se trouvait alors confiné aux zones 3 correspondant aux ouvertures de mailles de l'écran, la charge de caractère hydrophile conférant au film un caractère thixotropique.

La rugosité des aspérités 4 est encore améliorée par la présence de microsphérules de verre, en quantité de 40 g/kg de liant. Dans l'exemple choisi, cette charge était constituée du produit dénommé Q CELL 600 de la société P.Q. CORPORATION. Il s'agit de microsphérules de verre creuses, remplies d'air et résistant à la compression, ayant une densité à l'état non tassé d'environ 0,18 kg/dm3 et une dimension moyenne de particules d'environ 60 μ de diamètre. Ces microsphérules procurent une rugosité de surface optimale à caractère hydrophobe.

Bien que cela ne soit nullement impératif, on a encore introduit dans la composition d'enduction un pigment, dénommé Melio Perlglanz Powder, de la société K.J. QUINN, qui offre une protection supplémentaire contre les dégradations photochimiques. En raison de sa teinte nacrée, il procure aussi au film une belle qualité esthétique, permettant par ailleurs, de visualiser de façon nette la présence des zones 4 enduites, qui se différencient du reste de la surface 2 du ballon.

L'application de la composition d'enduction selon l'invention s'est faite en une opération avec un écran ayant une ouverture de mailles de 143 microns.

Des ballons de football ainsi obtenus ont été expérimentés par une équipe de joueurs professionnels dans des conditions de jeu particulièrement difficiles sur terrain détrempé, et même en présence de neige fondante. On a constaté que le comportement du ballon était beaucoup plus régulier que celui des ballons traditionnels non enduits. Les ballons selon l'invention glissaient sur le terrain mouillé d'une manière régulière, sans donner lieu à des trajectoires totalement aléatoires que l'on connaît avec les ballons usuels. Par ailleurs, le comportement au rebond était également plus normal et logique. Les aspérités de surface facilitaient aussi les prises de balle (arrêts par les gardiens).

Les meilleurs résultats ont été obtenus en utilisant, comme substrat de surface du ballon, une structure matelassée comportant une couche microalvéolaire.

Egalement, l'homme du métier comprendra qu'on peut organiser les zones de rugosité supérieure à la surface du ballon, d'une manière quelconque et sans que la répartition généralement linéaire illustrée aux dessins présente un caractère limitatif. Dans la pratique, on a également obtenu d'excellents résultats en disposant des zones en étoile ou en prévoyant diverses localisations consistant chacune en une zone rugueuse centrale entourée de zones semblables. Il suffit de modifier en correspondance les écrans utilisés lors de l'enduction. D'ailleurs, ces organisations de zones rugueuses, surtout si celles-ci sont légèrement colorées, créent complémentairement des effets visuels originaux à la surface du ballon.

## Revendications

1. Procédé de traitement de la surface externe de ballons de sport, caractérisé en ce qu'il consiste à appliquer sur ladite surface externe une composition à base d'un liant ou matrice capable d'adhérer fermement à la surface du ballon et contenant une charge inorganique en particules comprenant au moins une substance ayant un caractère hydrophile, une surface spécifique élevée supérieure à 40 m2/g et une densité apparente inférieure à 100 g/l.

2. Procédé selon la revendication 1, caractérisé en ce que le liant ou matrice est pratiquement non sensible à l'eau.

3. Procédé selon l'une des revendications 1 ou 2, caractérisé en ce que le liant ou matrice comprend les produits à base de polyuréthane, en solution ou en émulsion, les produits à base de styrène-butadiène, de butadiène-acrylonitrile, ou des produits à base acrylique, tels que les polyacrylates ou les polyméthacrylates.

4. Procédé selon la revendication 3, caractérisé en ce que le liant ou matrice est choisi parmi les liants à base de polyuréthane, en particulier à groupes NCO provenant de bases aliphatiques.

5. Procédé selon l'une quelconque des revendications 1 à 4, caractérisé en ce que la substance de caractère hydrophile confère au liant aux endroits d'application de la composition, des propriétés thixotropiques permettant de limiter l'étalement de la composition et d'obtenir un effet de relief à la surface du film.

6. Procédé selon l'une quelconque des revendications 1 à 5, caractérisé en ce que la substance de caractère hydrophile possède une surface spécifique d'environ 150 m2/g,

7. Procédé selon l'une quelconque des revendications 1 à 6, caractérisé en ce que la substance de caractère hydrophile possède une densité apparente d'environ 50-70 g/l,.

8. Procédé selon l'une quelconque des revendications 1 à 7, caractérisé en ce que la substance de caractère hydrophile possède une dimension moyenne de particules de 4 à 50 nanomètres, en particulier de 5 à 30 nanomètres environ.

9. Procédé selon l'une quelconque des revendications 1 à 8, caractérisé en ce que la substance de caractère hydrophile comprend des composés de silice pyrogénée.

10. Composition pour la mise en oeuvre du procédé selon l'une quelconque des revendications 1 à 9, caractérisée en ce qu'elle est à base d'un liant ou matrice capable d'adhérer fermement à la surface du ballon et contenant une charge inorganique en particules comprenant la combinaison d'au moins une substance de caractère hydrophile selon la revendication 1 et d'au moins une substance de caractère hydrophobe, ayant une densité apparente de 100 à 400 g/l.

11. Composition selon la revendication 10, caractérisée en ce que la substance de caractère hydrophobe possède une dimension moyenne de particules de 10 à 100 microns, en particulier de 50 à 120 microns, par exemple de l'ordre de 60 microns de diamètre.

12. Ballon de sport ayant une surface externe qui est recouverte localement sur une pluralité de zones réparties sur ladite surface par une composition de revêtement capable d'adhérer à la surface externe du ballon et qui n'est pas revêtue par ladite composition dans les parties autres que lesdites zones, ladite composition de revêtement comprenant un liant renfermant au moins une charge inorganique en particules qui est une substance à caractère hydrophile, ladite matière hydrophile ayant une surface spécifique élevée supérieure à 40 m2/g et une densité apparente inférieure à 100 g/l, ladite composition de revêtement faisant saillie de la surface externe sous la forme d'aspérités et procurant au ballon de sport une plus grande rugosité au niveau desdites zones que sur les autres parties de la surface externe.

13. Ballon de sport selon la revendication 12, dans lequel la composition de revêtement renferme au moins une charge qui est une substance à caractère hydrophobe ayant une densité d'environ 0,1 à moins de 0,4 kg/dm3.

14. Ballon de sport selon la revendication 11, caractérisé en ce que le liant est au moins un composé choisi parmi le groupe comprenant les produits à base de polyuréthane, les produits à base de styrènebutadiène, les produits à base de butadièneacrylonitrile et les produits à base acrylique, tels que les polyacrylates et les polyméthacrylates.

15. Ballon de sport selon la revendication 12, caractérisé en ce que la substance hydrophile a une dimension de particules d'un diamètre d'environ 4 à 50 nanomètres.

16. Ballon de sport selon la revendication 15, dans lequel la substance hydrophile est au moins un composé inorganique choisi parmi le groupe comprenant le verre et la silice pyrogénée.

17. Ballon de sport selon la revendication 16, dans lequel la substance hydrophile est présente dans le liant selon un rapport substance hydrophile : liant d'environ 30 à 70 g/kg.

18. Ballon de sport selon la revendication 13, dans lequel la matière hydrophobe a une dimension de particules d'un diamètre d'environ 10 à 200 microns.

19. Ballon de sport selon la revendication 18, dans lequel la substance hydrophobe est remplie d'air et est au moins une substance inorganique choisie parmi le groupe comprenant des microsphérules de verre remplies d'air et des microsphérules de silice remplies d'air.

20. Ballon de sport selon la revendication 19, dans lequel le verre est un verre au silicate alcalin ou alcalino-terreux, ou un verre au borosilicate.

21. Ballon de sport selon la revendication 19, dans lequel la substance hydrophobe est présente dans le liant selon un rapport substance hydrophobe : liant d'environ 10 à 50 g/kg.

22. Ballon de sport selon la revendication 12, dans lequel chaque zone présente une largeur d'environ 20 à 200 microns, chaque aspérité fait saillie vers l'extérieur sur environ 15 à 100 microns à partir de la surface externe, et lesdites saillies sont espacées les unes des autres sur environ 2 à 5 mm.

23. Ballon de sport selon la revendication 12, dans lequel le liant est sensiblement transparent.

24. Ballon de sport selon la revendication 12, dans lequel la composition de revêtement comprend en outre une matrice mélangée audit liant, si bien que ladite composition de revêtement présente une coloration permettant de la distinguer visuellement de la surface externe.

25. Ballon de sport selon la revendication 12, dans lequel la composition de revêtement renferme en outre un stabilisant pour le liant.

26. Ballon de football selon la revendication 12.

**Patentansprüche**

1. Verfahren zur Behandlung der Außenoberfläche von Sportbällen,
   dadurch gekennzeichnet,
   daß auf die Außenoberfläche eine Zusammensetzung auf der Grundlage eines Bindemittels oder einer Matrix aufgebracht wird, das bzw. die auf der Balloberfläche fest haftfähig ist und ein anorganisches teilchenförmiges Füllmittel enthält, welches zumindest eine Substanz mit hydrophiler Eigenschaft umfasst und eine hohe spezifische Oberfläche über 40 m$^2$/g sowie eine Schüttdichte unter 100 g/l hat.

2. Verfahren nach Anspruch 1,
   dadurch gekennzeichnet,
   daß das Bindemittel oder die Matrix praktisch unempfindlich gegenüber Wasser ist.

3. Verfahren nach einem der Ansprüche 1 und 2,
   dadurch gekennzeichnet,
   daß das Bindemittel oder die Matrix Stoffe auf Polyurethan-Basis, als Lösung oder als Emulsion, Stoffe auf Styrol-Butadien-Basis oder Butadien-Acrylnitril-Basis oder Stoffe auf Acrylbasis wie Polyacrylate oder Polymethacrylate umfasst.

4. Verfahren nach Anspruch 3,
   dadurch gekennzeichnet,
   daß das Bindemittel oder die Matrix aus Bindemitteln auf Polyurethan-Basis, insbesondere von aliphatischen Basen abstammenden und NCO-Gruppen aufweisenden, ausgewählt ist.

5. Verfahren nach einem der Ansprüche 1 bis 4,
dadurch gekennzeichnet,
daß die Substanz mit hydrophiler Eigenschaft dem Bindemittel bei dem Aufbringen der Zusammensetzung thixotrope Eigenschaften vermittelt, die eine Begrenzung des Ausbreitens der Zusammensetzung und die Erzielung eines Reliefeffekts auf der Oberfläche der Schicht ermöglichen.

6. Verfahren nach einem der Ansprüche 1 bis 5,
dadurch gekennzeichnet,
daß die Substanz mit hydrophiler Eigenschaft eine spezifische Oberfläche von etwa 150 m$^2$/g hat.

7. Verfahren nach einem der Ansprüche 1 bis 6,
dadurch gekennzeichnet,
daß die Substanz mit hydrophiler Eigenschaft eine Schüttdichte von etwa 50 - 70 g/l hat.

8. Verfahren nach einem der Ansprüche 1 bis 7,
dadurch gekennzeichnet,
daß die Substanz mit hydrophiler Eigenschaft eine mittlere Teilchengrösse von 4 - 50 Nanometer, insbesondere etwa 5 - 30 Nanometer, aufweist.

9. Verfahren nach einem der Ansprüche 1 bis 8,
dadurch gekennzeichnet,
daß die Substanz mit hydrophiler Eigenschaft pyrogene Siliziumverbindungen umfasst.

10. Zusammensetzung zur Durchführung des Verfahrens nach einem der Ansprüche 1 bis 9,
dadurch gekennzeichnet,
daß sie auf einem auf der Balloberfläche fest haftfähigen Bindemittel oder einer Matrix aufbaut. die ein anorganisches teilchenförmiges Füllmittel enthält, welches eine Kombination von mindestens einer Substanz mit hydrophiler Eigenschaft gemäß Anspruch 1 und mindestens einer Substanz mit hydrophober Eigenschaft mit einer Schüttdichte unter 100 g/l umfasst.

11. Zusammensetzung nach Anspruch 10,
dadurch gekennzeichnet,
daß die Substanz mit hydrophober Eigenschaft eine mittlere Teilchengrösse von 10 - 200 µ, insbesondere von 50 - 120 µ und beispielsweise 60 µ Durchmesser hat.

12. Sportball, dessen Außenoberfläche örtlich in einer Vielzahl von über diese Oberfläche verteilten Zonen mit einer auf der Ballaußenfläche fest haftfähigen Beschichtungs-Zusammensetzung überzogen ist und der in den Bereichen außerhalb dieser Zonen mit dieser Zusammensetzung nicht beschichtet ist, wobei die Beschichtungs-Zusammensetzung ein Bindemittel umfasst, das zumindest ein anorganisches teilchenförmiges Füllmittel in Form einer Substanz mit hydrophiler Eigenschaft enthält, und das hydrophile Material eine hohe spezifische Oberfläche über 40 m$^2$/g und eine Schüttdichte unter 100 g/l hat, und wobei die Beschichtungs-Zusammensetzung sich von der Außenoberfläche als Rauhigkeit abhebt und dem Sportball im Bereich der genannten Zonen eine grössere Griffigkeit als in den übrigen Bereichen der Außenoberfläche vermittelt.

13. Sportball nach Anspruch 12,
dadurch gekennzeichnet,
daß die Beschichtungs-Zusammensetzung zumindest ein Füllmittel enthält, das eine Substanz mit hydrophober Eigenschaft ist und eine Dichte von etwa 0,1 bis höchstens 0,4 kg/dm$^3$ hat.

14. Sportball nach Anspruch 12,
dadurch gekennzeichnet,
daß das Bindemittel zumindest eine Verbindung aus der Gruppe Stoffe auf Polyurethan-Basis, Stoffe auf Styrol-Butadien-Basis, Stoffe auf Butadien-Acrylnitril-Basis und Stoffe auf Acryl-Basis, z.B. Polyacrylate und Polymethacrylate, ist.

15. Sportball nach Anspruch 12,
dadurch gekennzeichnet,
daß die hydrophile Substanz eine Teilchengrösse mit einem Durchmesser von etwa 4 bis 50 Nanometer aufweist.

16. Sportball nach Anspruch 15,
dadurch gekennzeichnet,
daß die hydrophile Substanz mindestens eine anorganische Verbindung aus der Gruppe von Glas und pyrogenem Silizium ist

17. Sportball nach Anspruch 16,
dadurch gekennzeichnet,
daß die hydrophile Substanz in dem Bindemittel in einem Verhältnis von hydrophile Substanz/Bindemittel von etwa 30 bis 70 g/kg vorliegt.

18. Sportball nach Anspruch 13,
dadurch gekennzeichnet,
daß das hydrophobe Material eine Teilchengrösse mit einem Durchmesser von etwa 10 bis 200 µ aufweist.

19. Sportball nach Anspruch 18,
dadurch gekennzeichnet,
daß die hydrophobe Substanz mit Luft gefüllt ist und mindestens eine anorganische Substanz aus der Gruppe luftgefüllte Mikro-Glaskugeln und luftgefüllte Mikro-Siliziumkugeln ist.

20. Sportball nach Anspruch 19,
dadurch gekennzeichnet,
daß das Glas ein Alkali- oder Erdalkali-Silikatglas oder ein Bor-Silikatglas ist.

21. Sportball nach Anspruch 19,
dadurch gekennzeichnet,
daß die hydrophobe Substanz in dem Bindemittel in einem Verhältnis von hydrophobe Substanz/Bindemittel von etwa 10 bis 50 g/kg vorliegt.

22. Sportball nach Anspruch 12.
dadurch gekennzeichnet,
daß jede Zone eine Breite von etwa 20 bis 200 µ hat, jede Rauhigkeit nach außen um etwa 15 bis 100 µ, ausgehend von der Außenoberfläche, vorspringt und die genannten Vorsprünge einen Abstand voneinander von etwa 2 bis 5 mm haben.

23. Sportball nach Anspruch 12,
dadurch gekennzeichnet,
daß das Bindemittel weitgehend transparent ist.

24. Sportball nach Anspruch 12,
dadurch gekennzeichnet,
daß die Beschichtungs-Zusammensetzung weiterhin eine dem Bindemittel zugemischte Matrix enthält und eine Färbung aufweist, die ihre visuelle Unterscheidung von der Außenoberfläche erlaubt.

25. Sportball nach Anspruch 12,
dadurch gekennzeichnet,
daß die Beschichtungs-Zusammensetzung ein Stabilisierungsmittel für das Bindemittel enthält.

26. Sportball nach Anspruch 12,
dadurch gekennzeichnet,
daß es ein Fußball ist.

**Claims**

1. Method for the treatment of the outer surface of sports balls, characterized in that it consists in applying to said outer surface a composition based on a binder or matrix capable of adhering firmly to the surface of the ball and containing a particulate inorganic filler comprising at least one substance having a hydrophilic character, a specific surface area greater than 40 m²/g and a bulk density lower than 100 g/l.

2. Method as claimed in Claim 1, characterized in that the binder or matrix is water-resistant.

3. Method as claimed in Claim 1 or Claim 2, characterized in that the binder or matrix comprises polyurethane base products, in solution or in emulsion, products based on styrene/butadiene, butadiene/acrylonitrile, or acrylic base products, such as polyacrylates or polymethacrylates.

4. Method as claimed in Claim 3, characterized in that the binder or matrix is selected from among the polyurethane base binders, particularly with NCO groups derived from aliphatic bases.

5. Method as claimed in any one of Claims 1 to 4, characterized in that the substance of a hydrophilic character gives to the binder, at the places of application of the composition, thixotropic properties allowing to limit the spreading of the composition and to obtain a relief effect on the film surface.

6. Method as claimed in any one of Claims 1 to 5, characterized in that the substance of a hydrophilic character has a specific surface area of about 150 m²/g.

7. Method as claimed in any one of Claims 1 to 6, characterized in that the substance of a hydrophilic character has a bulk density of about 50 to 70 g/l.

8. Method as claimed in any one of Claims 1 to 7, characterized in that the substance of a hydrophilic character has an average particle size of 4 to 50 nm, and particularly from 5 to about 30 nm.

9. Method as claimed in any one of Claims 1 to 8, characterized in that the substance of a hydrophilic character contains compounds of pyrogenic silica.

10. Composition for the application of the method as claimed in any one of Claims 1 to 9, characterized in that it is based on a binder or matrix capable of adhering firmly to the surface of the ball and containing a particulate inorganic filler comprising the combination of at least one substance of a hydrophilic character as claimed in Claim 1, and at least one substance of a hydrophobic character having a bulk density less than 100 g/l.

11. Composition as claimed in Claim 10, characterized in that the substance of a hydrophobic character has an average particle size of 10 to 200 μm, and particularly from 50 to 120 μm, for example, about 60 μm in diameter.

12. Sports ball having an outer surface which is covered locally on a plurality of zones distributed over said surface by a coating composition capable of adhering to the outer surface of the ball, and which is not coated with said composition in the portions other than said zones, said coating composition comprising a binder containing at least one particulate inorganic filler which is a substance of a hydrophilic character, said hydrophilic material having a high specific surface area greater than 40 m²/g and a bulk density less than 100 g/l, said coating composition projecting from the outer surface in the form of rough edges imparting to the sports ball a greater roughness in said zones than in the other portions of the outer surface.

13. Sports ball as claimed in Claim 12, in which the coating composition contains at least one filler which is a substance of a hydrophobic character having a density of about 0.1 to less than 0.4 kg/dm³.

14. Sports ball as claimed in Claim 12, characterized in that the binder is at least one compound selected from among the group comprising polyurethane base products, styrene/butadiene base products, butadiene/acrylonitrile base products and acrylic base products, such as polyacrylates and polymethacrylates.

15. Sports ball as claimed in Claim 12, characterized in that the hydrophilic substance has a particle size of about 4 to 50 nm in diameter.

16. Sports ball as claimed in Claim 15, in which the hydrophilic substance is at least one inorganic compound selected from among the group comprising glass and pyrogenic silica.

17. Sports ball as claimed in Claim 16, in which the hydrophilic substance is present in the binder in a hydrophilic/binder ratio of about 30 to 70 g/kg.

18. Sports ball as claimed in Claim 13, in which the hydrophobic material has a particle size of about 10 to 200 μm in diameter.

19. Sports ball as claimed in Claim 18, in which the hydrophobic substance is filled with air, and is at least an inorganic substance selected from among the group comprising air-filled glass microspherules and air-filled silica microspherules.

20. Sports ball as claimed in Claim 19, in which the glass is an alkaline or alkaline earth silicate glass, or a borosilicate glass.

21. Sports ball as claimed in Claim 19, in which the hydrophobic substance is present in the binder in a hydrophobic substance/binder ratio of about 10 to 50 g/kg.

22. Sports ball as claimed in Claim 12, in which each zone exhibits a width of about 20 to 200 μm, each rough edge projecting outward about 15 to 100 μm from the outer surface, and said projections being spaced about 2 to 5 mm from each other.

23. Sports ball as claimed in Claim 12, in which the binder is approximately transparent.

24. Sports ball as claimed in Claim 12, in which the coating composition also comprises a matrix blended with said binder, so that said coating composition exhibits a coloration that serves to distinguish it visually from the outer surface.

25. Sports ball as claimed in Claim 12, in which the coating composition also contains a stabilizer for the binder.

26. Football as claimed in Claim 12.

II →

1

3a

3b

3c

II →

3

2

FIG.1

3a    3b    3c

FIG.2

2

4

4

2

FIG.3